(19) Europäisches Patentamt
European Patent Office
Office européen des brevets

(11) Veröffentlichungsnummer: **0 350 444 A1**

(12) **EUROPÄISCHE PATENTANMELDUNG**

(21) Anmeldenummer: **89810480.7**

(22) Anmeldetag: **21.06.89**

(51) Int. Cl.[5]: **C 08 F 2/44**
C 08 F 10/00, C 08 K 5/349

(30) Priorität: **30.06.88 CH 2502/88**

(43) Veröffentlichungstag der Anmeldung:
**10.01.90 Patentblatt 90/02**

(84) Benannte Vertragsstaaten:
**AT BE DE ES FR GB IT NL SE**

(71) Anmelder: **CIBA-GEIGY AG**
**Klybeckstrasse 141**
**CH-4002 Basel (CH)**

(72) Erfinder: **Mülhaupt, Rolf, Prof. Dr.**
**Chemin de la Prairie 2**
**CH-1723 Marly (CH)**

**Rody, Jean, Dr.**
**Rütiring 82**
**CH-4125 Riehen (CH)**

**Slongo, Mario, Dr.**
**Sägetrainweg 553**
**CH-1712 Tafers (CH)**

(54) **Verfahren zum Stabilisieren von Polyolefinen.**

(57) Polyolefine und Olefincopolymere, welche durch Polymerisation an einem Katalysator aus einem Magnesiumhalogenid, einer Titanverbindung und einem Aluminiumalkyl hergestellt werden, können durch Zusatz bestimmter sterisch gehinderter Triazinylpiperidine, die in 1-Stellung substituiert sind, zur Polymerisation stabilisiert werden.

EP 0 350 444 A1

## Beschreibung

### Verfahren zum Stabilisieren von Polyolefinen

Die Erfindung betrifft ein Verfahren zum Stabilisieren von Polyolefinen und Olefin-Copolymeren durch Zusatz bestimmter Stabilisatoren zur Polymerisation, wobei die Polymerisation nach einem bestimmten Verfahren geschieht. Die Erfindung betrifft auch die so stabilisierten Olefinpolymeren.

Die Niederdruck-Polymerisation von Olefinen mittels metall-organischen Komplexkatalysatoren (z.B. Ziegler-Natta-Katalysatoren) führt üblicherweise zu einem feinpulvrigen Polymerisat, das vor der formgebenden Verarbeitung in einem Extruder granuliert werden muss. Stabilisatoren und andere Additive werden bei dieser Granulierung zugesetzt.

Neuerdings ist es gelungen, durch Verwendung von festen Trägerkatalysatoren sphärisch granulatartige Polymerisate herzustellen, die nicht mehr granuliert werden müssen, sondern direkt verarbeitet werden können. Als Träger für diese festen Katalysatoren haben sich vor allem sphärische Magnesiumhalogenide einer bestimmten Teilchengrösse bewährt, wie dies z.B. in der US-A-4 111 835 beschrieben ist. Das wasserfreie Magnesiumhalogenid bildet mit $TiCl_4$ und Elektronendonatoren unlösliche Komplexe, die dann mit Aluminiumalkylen aktiviert werden. Die Stereospezifität und Aktivität wird durch Mitverwendung von Elektronendonatoren wie z.B. Carbonsäureestern oder Verbindungen mit Si-O-C-Bindungen verstärkt, wie dies z.B. in der EP-A-45 977 beschrieben ist.

Es wurde weiterhin kürzlich gefunden (EP-A-197 987), dass man bei dieser Art von Olefinpolymerisation Stabilisatoren vom Typ der sterisch gehinderten Piperidine zur Polymerisation zusetzen kann, ohne dass dadurch der Polymerisationsprozess beeinträchtigt wird.

Es werden dabei weder die Polymerisationsausbeute noch die Qualität des Polymerisates verringert und es wird eine Stabilisierung gegen thermische, oxidative und photochemische Alterung erreicht, die mindestens gleich mit dem Effekt bei nachträglichem Zusatz eines solchen Stabilisators zum fertigen Polymeren ist. Der Vorteil ist die Einsparung eines Arbeitsganges, nämlich des Mischens und Granulierens.

In der EP-A-192 987 ist dieses Stabilisierungsverfahren beschrieben und es sind dort eine grosse Anzahl von Verbindungen beschrieben, die sich als Stabilisatoren für dieses Verfahren eignen, darunter auch solche sterisch gehinderten Piperidinderivate, die in ihrem Molekül eine s-Triazingruppe enthalten.

In weiterer Bearbeitung dieses Gebietes wurde gefunden, dass sich bestimmte Piperidinderivate, die in ihrem Molekül mindestens eine s-Triazingruppe enthalten, besonders gut für die Stabilisierung durch Zusatz zur Polymerisation von Olefinen eignen.

Die Erfindung betrifft im Detail ein Verfahren zum Stabilisieren von Polyolefinen und Olefin-copolymeren, welche durch Niederdruck-Polymerisation an einem festen Katalysator, der durch Umsetzung eines Aluminiumalkyls mit einem festen Produkt aus einem Magnesiumdihalogenid in aktiver Form und einer Titanverbindung bereitet wurde, hergestellt werden, durch Zusatz eines sterisch gehinderten Piperidinderivates zur Polymerisation, dadurch gekennzeichnet, dass man ein Piperidinderivat der Formel I verwendet,

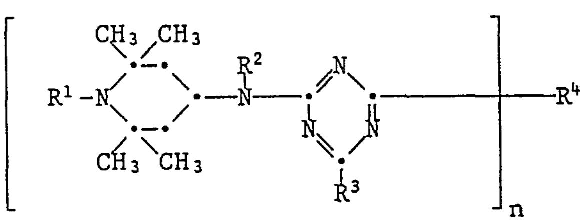

(I)

worin n 1-4 ist,
$R^1$ $C_1$-$C_4$-Alkyl, Allyl, Benzyl oder Acetyl bedeutet und im Fall von n=2 auch Wasserstoff bedeutet,
$R^2$ $C_1$-$C_{18}$-Alkyl, $C_5$-$C_{12}$-Cycloalkyl, $C_7$-$C_{12}$-Phenylalkyl, durch -O- oder -N($R^6$)- unterbrochenes $C_3$-$C_{12}$-Alkyl oder eine Gruppe der Formel II bedeutet,

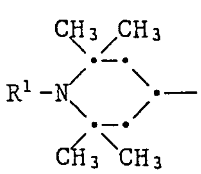

(II)

$R^3$ eine Gruppe -O$R^5$, -S$R^5$ oder

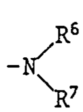

ist,

$R^4$, wenn n = 1 ist, eine der für $R^3$ gegebenen Bedeutungen hat, wenn n = 2 ist, eine der Gruppen -X-$R^8$-Y-,

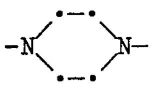 , 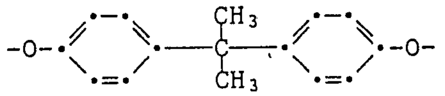 , 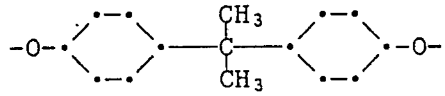

oder 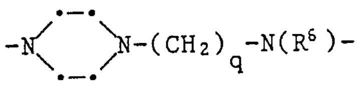

bedeutet, worin q 2-6 ist,
wenn n = 3 ist, eine der Gruppen

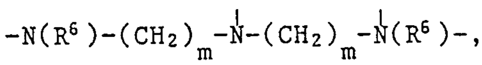, 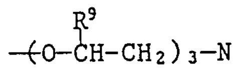 oder

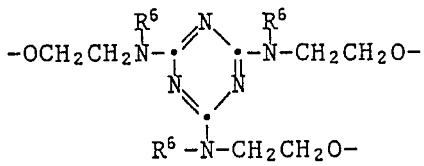

bedeutet und, wenn n = 4 ist, eine Gruppe

-N($R^6$)-$CH_2CH_2$-N-$CH_2CH_2$-N-$CH_2CH_2$-N($R^6$)- oder

-N($R^6$)-$(CH_2)_3$-N-$(CH_2)_p$-N-$(CH_2)_3$-N($R^6$)-
bedeutet,
$R^5$ $C_1$-$C_{18}$-Alkyl, $C_3$-$C_{12}$-Alkenyl, $C_5$-$C_{12}$-Cycloalkyl, $C_7$-$C_{12}$-Phenylalkyl, Phenyl oder durch $C_1$-$C_4$-Alkyl, $C_1$-$C_4$-Alkoxy oder Halogen substituiertes Phenyl bedeutet,
$R^6$ und $R^7$ unabhängig voneinander Wasserstoff, $C_1$-$C_{18}$-Alkyl, $C_5$-$C_{12}$-Cycloalkyl, $C_7$-$C_{12}$-Phenylalkyl oder eine Gruppe der Formel II bedeuten, oder $R^6$ und $R^7$ zusammen $C_4$-$C_{10}$-Alkylen oder $C_5$-$C_7$-Oxa- oder Azaalkylen bedeuten,
$R^8$ $C_2$-$C_{12}$-Alkylen, durch -O- oder -N($R^6$)- unterbrochenes $C_4$-$C_{12}$-Alkylen, $C_5$-$C_{12}$-Cycloalkylen oder Phenylen bedeutet,
$R^9$ Wasserstoff oder Methyl bedeutet,
X und Y unabhängig voneinander -O- oder -N($R^6$)- bedeuten,
m 2 oder 3 bedeutet und p 2-10 bedeutet.

Der Rest $R_1$ als $C_1$-$C_4$-Alkyl kann z.B. Methyl, Ethyl, Propyl oder Butyl sein, bevorzugt ist $R_1$ Methyl.

$R^2$, $R^5$, $R^6$ und $R^7$ als $C_1$-$C_{18}$-Alkyl kann unverzweigtes oder verzweigtes Alkyl sein. Beispiele hierfür sind Methyl, Ethyl, n-Propyl, Isopropyl, n-Butyl, Isobutyl, tert.Butyl, n-Pentyl, sec-Pentyl, n-Hexyl, 2-Ethylbutyl, n-Octyl, 2-Ethylhexyl, n-Decyl, Isodecyl, n-Dodecyl, 2,2,4,4-Tetramethylbutyl, n-Tetradecyl, n-Hexadecyl oder n-Octadecyl. $R^2$ als durch O oder N($R^6$) unterbrochenes Alkyl kann z.B. 2-Methoxyethyl, 2-Ethoxyethyl, 2-Butoxyethyl, 3-Methoxypropyl, 2-Dimethylaminoethyl oder 3-Diethylaminopropyl sein.

$R^2$, $R^5$, $R^6$ und $R^7$ als $C_5$-$C_{12}$-Cycloalkyl können z.B. Cyclopentyl, Cyclohexyl, Cyclooctyl oder Cyclododecyl sein. Bevorzugt ist ein solcher Rest Cyclohexyl.

$R^2$, $R^5$, $R^6$ und $R^7$ als $C_7$-$C_{12}$-Phenylalkyl können z.B. Benzyl, 2-Phenylethyl, 1-Phenylethyl oder $\alpha,\alpha$-Dimethylbenzyl sein. Bevorzugt ist ein solcher Rest Benzyl.

$R^5$ als $C_3$-$C_{12}$-Alkenyl kann z.B. Allyl, Methallyl, But-2-enyl, But-3-enyl, Hex-2-enyl, Hex-5-enyl, Oct-7-enyl oder Dec-9-enyl sein. Verbindungen mit solchen ungesättigten Substituenten können im Reaktionsmedium copolymerisieren.

$R^5$ als durch Alkyl, Alkoxy oder Halogen substituiertes Phenyl kann z.B. p-Tolyl, m-Tolyl, 4-tert.Butylphenyl, 4-Methoxyphenyl, 3-Ethoxyphenyl oder 4-Chlorphenyl sein.

$R^8$ als $C_2$-$C_{12}$-Alkylen kann unverzweigtes oder verzweigtes Alkylen sein. Beispiele hierfür sind Di-, Tri-, Tetra-, Hexa-, Octa-, Deca-, Dodecamethylen, 1,2-Propylen oder 2,2-Dimethyl-1,3-propylen. Ist der Alkylen rest durch O oder N($R^6$) unterbrochen, so kann dies z.B. 3-Oxapentamethylen, 4-Oxaheptamethylen, 3,6-Dioxaoctamethylen, 3-Aza- oder 3-Methylazapentamethylen sein.

$R^8$ als Cycloalkylen kann insbesondere Cyclohexylen sein.

Wenn $R^6$ und $R^7$ zusammen Alkylen, Oxa- oder Azaalkylen sind, so bilden sie zusammen mit dem N-Atom an das sie gebunden sind, einen heterocyclischen Ring, z.B. einen Pyrrolidin-, Piperidin-, Hexamethylenimino-,

Morpholin-oder Piperazinring. Diese Ringe können alkyliert sein.

Bevorzugt verwendet man solche Verbindungen der Formel I, worin
n 1-4 ist,
$R^1$ $C_1$-$C_4$-Alkyl ist und im Fall von n = 2 auch Wasserstoff ist,
$R^2$ $C_1$-$C_{12}$-Alkyl, Cyclohexyl, Benzyl oder eine Gruppe der Formel II ist,
$R^3$ eine Gruppe $-OR^5$ oder $-N(R^6)(R^7)$ ist,
$R^4$, wenn n = 1 ist, eine der für $R^3$ gegebenen Bedeutungen hat, wenn n = 2 ist, eine Gruppe $-X-R^8-Y-$ oder

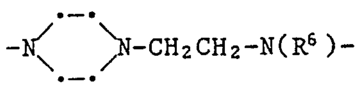

bedeutet,
wenn n = 3 ist, eine Gruppe
$-N(R^6)-(CH_2)_m-N-(CH_2)_m-N(R^6)-$ bedeutet,
und wenn n = 4 ist, eine Gruppe
$-N(R^6)-CH_2CH_2-N-CH_2CH_2-N-CH_2CH_2-N(R^6)-$
oder
$-N(R^6)-CH_2CH_2CH_2-N-(CH_2)_p-N-CH_2CH_2CH_2-N(R^6)-$ bedeutet,
$R^5$ $C_1$-$C_{12}$-Alkyl, Cyclohexyl, Benzyl, Phenyl oder Tolyl bedeutet,
$R^6$ Wasserstoff, $C_1$-$C_{12}$-Alkyl, Cyclohexyl, Benzyl oder eine Gruppe der Formel II bedeutet,
$R^7$ $C_1$-$C_{12}$-Alkyl, Cyclohexyl oder eine Gruppe der Formel II bedeutet, oder
$R_6$ und $R^7$ zusammen Tetramethylen, Pentamethylen oder 3-Oxapentamethylen bedeuten,
$R^8$ $C_2$-$C_{12}$-Alkylen, Cyclohexylen oder Phenylen bedeutet,
X und Y -O- oder $-N(R^6)-$ bedeuten,
m 2 oder 3 ist und p 2-6 bedeutet.

Bevorzugt ist $R^1$ Methyl und $R^2$ $C_1$-$C_8$-Alkyl oder eine Gruppe der Formel II. Bevorzugt ist $R^3$ eine Gruppe $-N(R^6)(R^7)$. Wenn in Formel I n = 1 ist, ist $R^4$ bevorzugt eine Gruppe $-N(R^6)(R^7)$. Wenn n = 2 ist, sind X und Y bevorzugt eine Gruppe $-N(R^6)-$ und $R^8$ bevorzugt $C_2$-$C_6$-Alkylen. Wenn n = 3 oder 4 ist, ist $R^6$ bevorzugt Wasserstoff oder $C_1$-$C_4$-Alkyl, insbesondere Methyl.

Die Verbindungen der Formel I sind bekannte Verbindungen oder können in Analogie dazu hergestellt werden. Beschrieben sind solche Verbindungen z.B. in US-A-3 925 376, US-A-4 108 829, EP-A-107 615, DE-A-3 727 977, DE-A-3 809 628, EP-A-292 437, EP-A-299 925.

Beispiele für Piperidinverbindungen, die erfindungsgemäss verwendet werden können, sind die Verbindungen der folgenden Formeln:

1. 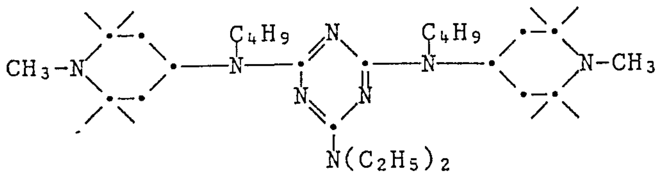

2. 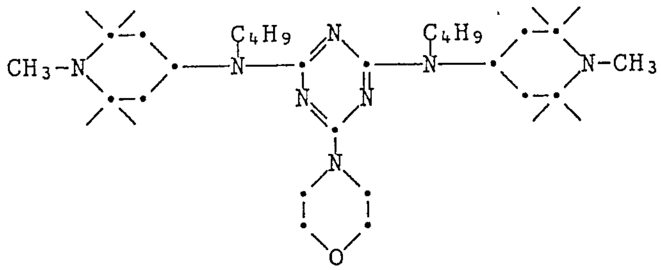

3. 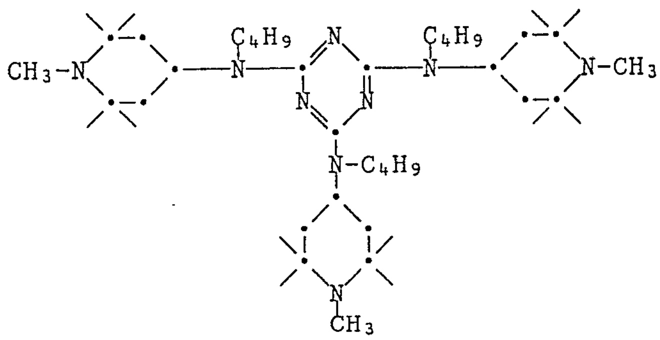

4. 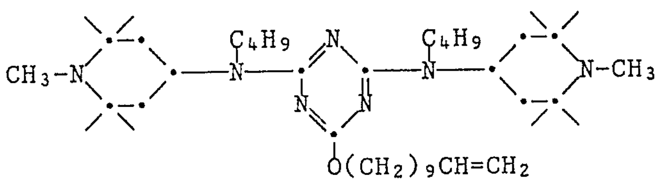

5. 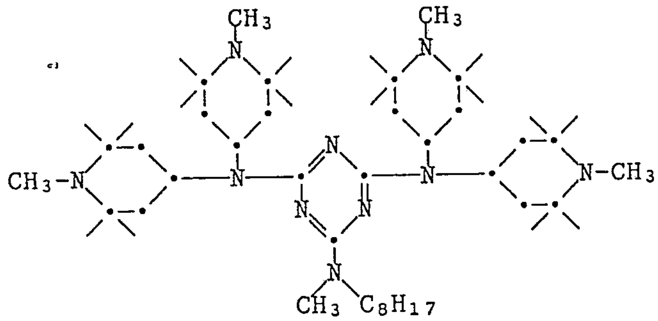

6. 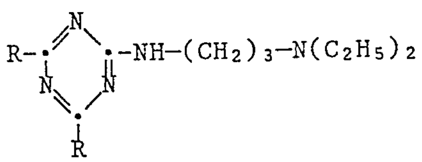

R = 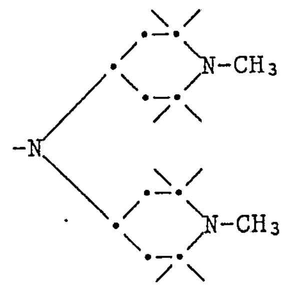

7. 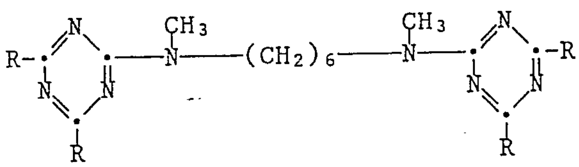

8. 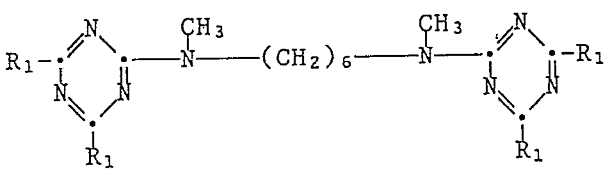

$R_1$ = 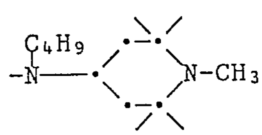

9. 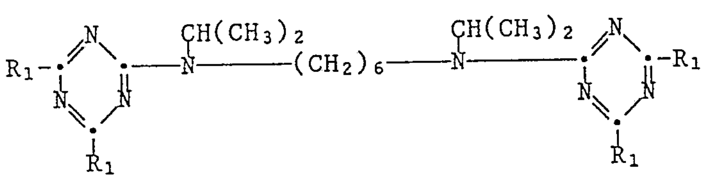

10. 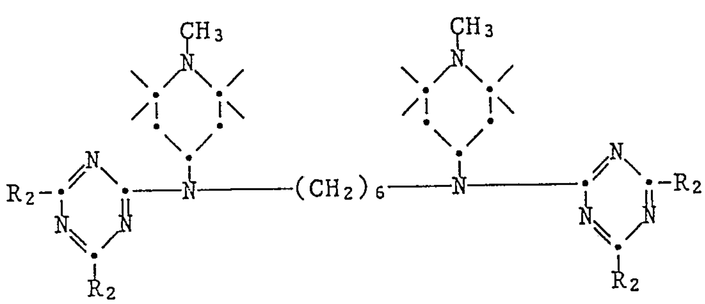

$R_2$ =
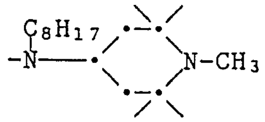

11.
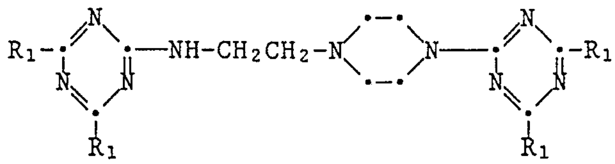

12.
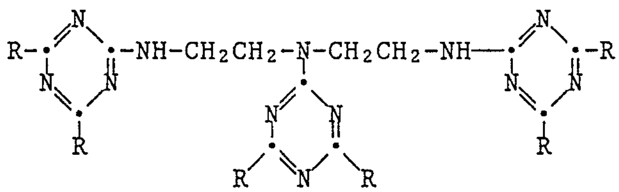

13.
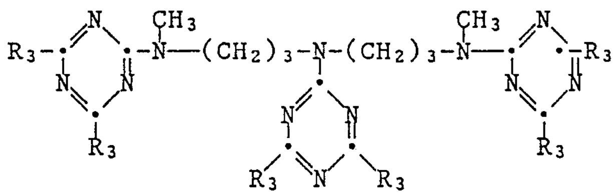

$R_3$ =
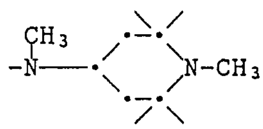

14.
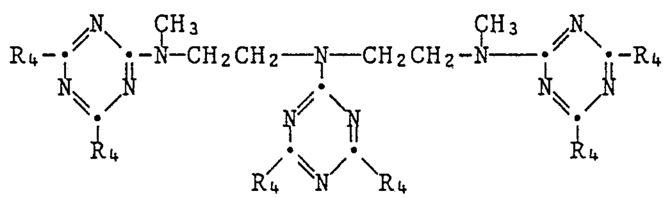

$R_4$ =
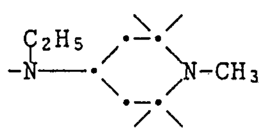

15.
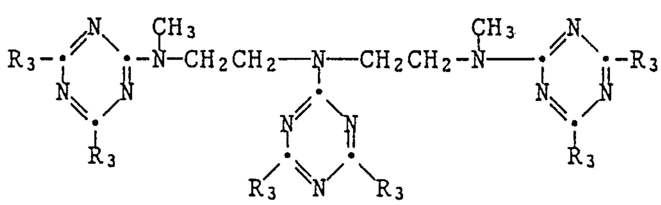

16.
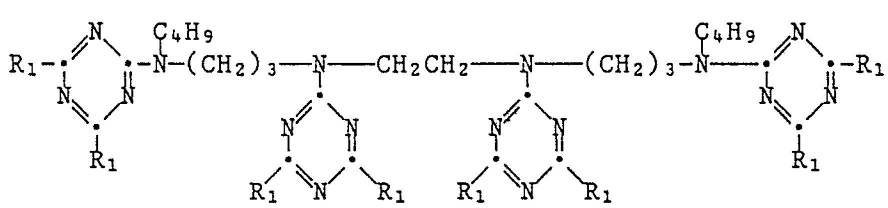

17. 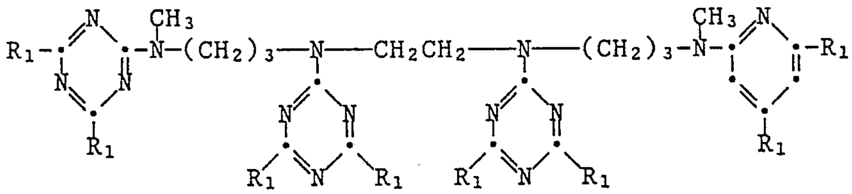

18. 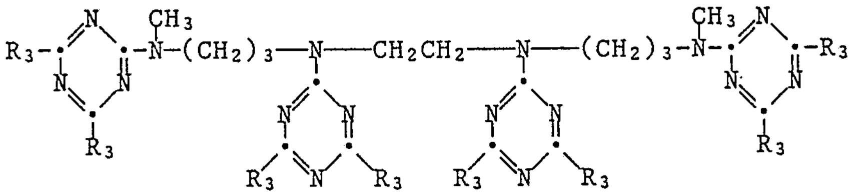

19. 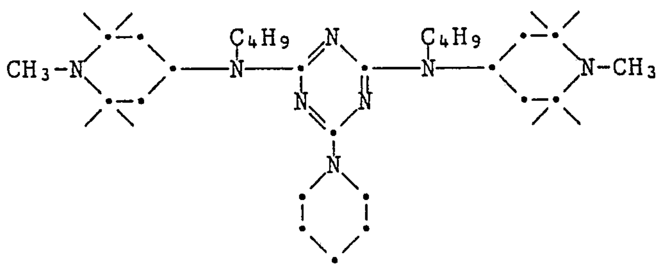

20. 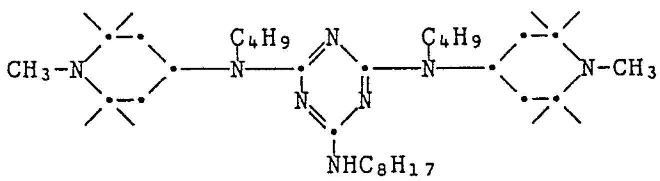

21. 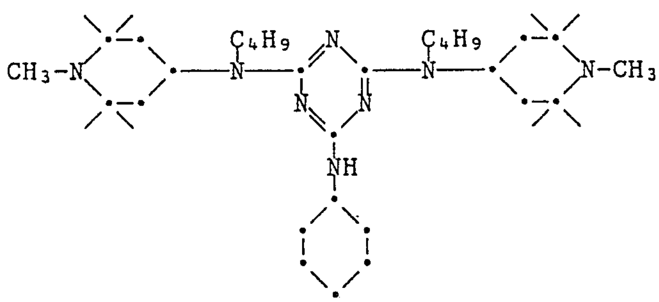

22. 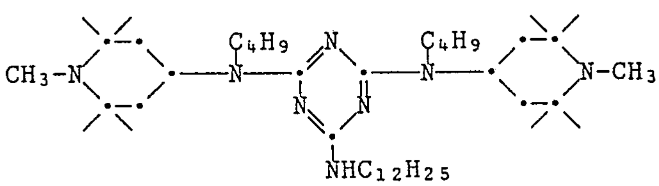

23. 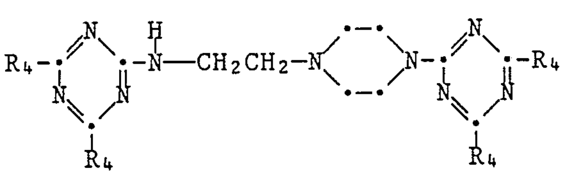

24. 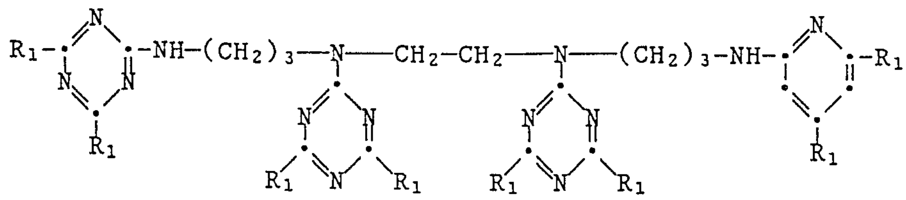

25. 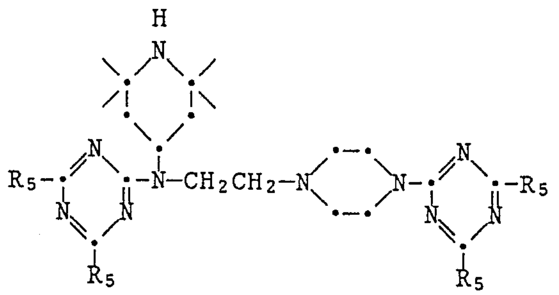

$R_5$ = 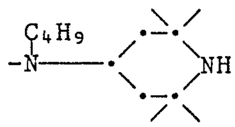

26. 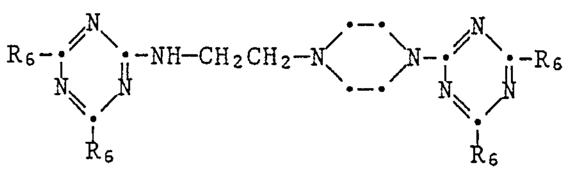

$R_6$ = 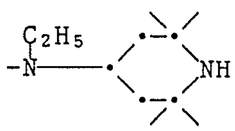

In den Formeln 1-26 bedeutet

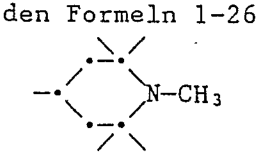

einen 1,2,2,6,6-Pentamethylpiperidin-Rest.

Die verwendeten Polymerisationskatalysatoren sind feste Katalysatoren. Sie bestehen aus einem wasserfreien Magnesiumdihalogenid in aktiver Form und einer Titanverbindung. Unter Magnesiumdihalogenid in aktiver Form ist ein solches zu verstehen, in dessen Röntgenspektrum die Linie der stärksten Reflexion verbreitert ist gegenüber der entsprechenden Linie im Spektrum des inaktiven Magnesiumhalogenids.

Vorzugsweise wird als Magnesiumhalogenid Magnesiumdichlorid oder Magnesiumbromid verwendet. Bevorzugt wird sphärisches Magnesiumchlorid verwendet. Die Titanverbindung enthält vorzugsweise mindestens eine Titan-Halogen-Bindung, besonderes bevorzugt verwendet man Titantetrachlorid.

Die Titanverbindung kann in Kombination mit einem Elektronendonator verwendet werden, beispielsweise einem Carbonsäureester, wie dies in der EP-A-45 977 beschrieben ist.

Nach der Umsetzung der Magnesiumhalogenid-Komponente mit der Titanverbindung und gegebenenfalls mit dem Elektronendonator werden die überschüssige Titanverbindung und der überschüssige Elektronendonator zweckmässig mit einem inerten Lösungsmittel ausgewaschen, beispielsweise mit Hexan oder Heptan.

Der so bereitete Katalysator wird aktiviert durch Umsetzung mit einem Aluminiumalkyl, das vorzugsweise als Lösung in einem Alkan verwendet wird. Beispiele für geeignete Aluminiumalkyle sind $Al(C_2H_5)_3$ oder $Al(C_4H_9)_3$. Hierbei kann man als Coaktivator einen Elektronendonator zusetzen wie z.B. eine organische Siliziumverbindung, die mindestens eine Si-O-C-Bindung enthält, wie dies z.B. in der EP-A-45 977 beschrieben ist. Beispiele für solche Siliziumverbindungen sind Phenyltriethoxysilan, Phenyltrimethoxysilan, Diphenyldimethoxysilan, Methyltriethoxysilan, Dimethyldiethoxysilan oder Ethyltrimethoxysilan.

Die Polymerisation mit diesen Katalysatoren kann in flüssiger oder gasförmiger Phase durchgeführt werden. Vorzugsweise arbeitet man in flüssiger Phase, beispielsweise in Alkanen oder im flüssigen Monomer.

Der Stabilisator (Piperidinverbindung) kann am Beginn der Polymerisation, während der Polymerisation oder am Ende der Polymerisation zugesetzt werden. Bevorzugt setzt man ihn während der Polymerisation zu.

Zweckmässigerweise sorgt man durch kräftiges Rühren für eine möglichst homogene Verteilung des Katalysators und des Stabilisators im Polymerisationsmedium.

Die Menge des Zusatzes an Piperidinstabilisator richtet sich nach dem gewünschten Grad der Stabilisierung. Im allgemeinen setzt man 0,01 bis 5 Gew.-%, insbesondere 0,05 bis 1 Gew.-%, bezogen auf das Polymer, zu.

Ausser dem Piperidin-Stabilisator können noch andere Stabilisatoren bei der Polymerisation zugesetzt werden. Als solche eignen sich vor allem Phosphor-III-ester. Diese können Phosphite, Phosphonite oder Phosphinite sein. Sie können eine oder mehrere Phosphorestergruppen enthalten. Vorzugsweise setzt man ein Triorganophosphit zu. Beispiele für solche Phosphor-III-ester sind:

Triphenylphosphit, Decyl-diphenylphosphit, Phenyl-didecylphosphit, Tris(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4′-biphenylen-diphosphonit, Bis-(2,6-di-tert.butyl-4-methyl-phenyl)-pentaerythritdiphosphit.

Alternativ oder zusätzlich zu den Phosphor-III-estern können noch andere Stabilisatoren oder Zusatzstoffe, die den Polymerisationsprozess nicht stören, zugesetzt werden, beispielsweise Antioxidantien vom Typ der sterisch gehinderten Phenole.

Beispiele für solche Antioxidantien sind folgende Verbindungen:

Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.

Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

Hydroxylierte Thiodiphenylether, z.B. 2,2′-Thio-bis-(6-tert.butyl-4-methylphenol), 2,2′-Thio-bis-(4-octylphenol), 4,4′-Thio-bis-(6-tert.butyl-3-methylphenol), 4,4′-Thio-bis-(6-tert.butyl-2-methylphenol).

Alkyliden-Bisphenole, z.B. 2,2′-Methylen-bis-(6-tert.butyl-4-methylphenol), 2,2′-Methylen-bis-(6-tert.butyl-4-ethylphenol), 2,2′-Methylen-bis-[4-methyl-6-(α-methylcyclohexyl)-phenol], 2,2′-Methylen-bis-(4-methyl-6-cyclohexylphenol), 2,2′-Methylen-bis-(6-nonyl-4-methylphenol), 2,2′-Methylen-bis-(4,6-di-tert.butylphenol), 2,2′-Ethyliden-bis-(4,6-di-tert.butylphenol), 2,2′-Ethyliden-bis-(6-tert.butyl-4-isobutylphenol), 2,2′-Methylen-bis-[6-(α-methylbenzyl)-4-nonylphenol], 2,2′-Methylen-bis-[6-(α,α-dimethylbenzyl)-4-nonylphenol], 4,4′-Methylen-bis-(2,6-di-tert.butylphenol), 4,4′-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3′-tert.butyl-4′-hydroxyphenyl)-butyrat], Bis-(3-tert.butyl-4-hydroxy-5-methylphenyl)-dicyclopentadien, Bis-[2-(3′-tert.butyl-2′-hydroxy-5′-methylbenzyl)-6-tert.butyl-4-methyl-phenyl]-terephthalat.

Benzylverbindungen, z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.

Acylaminophenole, z.B. 4-Hydroxy-laurinsäureanilid, 4-Hydroxy-stearinsäureanilid, 2,4-Bis-(octylmercapto)-6-(3,5-di-tert.butyl-4-hydroxyanilino)-s-triazin, N-(3,5-di-tert.butyl-4-hydroxyphenyl)-carbaminsäureoctylester.

Ester der ß-(3,5-Di-tert.butyl-4-hydroxyphenyl)-propionsäure mit ein-oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N′-Bis-(hydroxyethyl)-oxalsäurediamid.

Ester der ß-(5-tert.Butyl-4-hydroxy-3-methylphenyl)-propionsäure mit ein-oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N′-Bis-(hydroxyethyl)-oxalsäurediamid.

Ester der ß-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N′-Bis-(hydroxyethyl)-oxalsäurediamid.

Amide der ß-3,5-Di-tert.butyl-4-hydroxyphenol)-propionsäure, wie z.B. N,N′-Bis-(3,5-di-tert.butyl-4-hydroxyphenylpropionyl)-hexamethylendiamin, N,N′-Bis-(3,5-di-tert.butyl-4-hydroxyphenylpropionyl)-trimethylendiamin, N,N′-Bis-(3,5-di-tert.butyl-4-hydroxyphenylpropionyl)hydrazin.

Die Menge an Phosphor-III-ester oder sonstigen Stabilisatoren richtet sich nach der Menge an zugesetzter Piperidinverbindung. Im allgemeinen verwendet man 0,01 bis 1 Gew.-%, insbesondere 0,05 bis 0,5 Gew.-%, bezogen auf das Polymere.

Das erfindungsgemässe Verfahren betrifft den Stabilisatorzusatz zur Polymerisation oder Copolymerisation von Olefinen. Bei den Olefinen kann es sich um Ethylen oder um α-Olefine handeln. Beispiele für α-Olefin sind Propylen, Buten-1, Penten-1, 3-Methylbuten-1, 4-Methylpenten-1 oder 5-Methylhexen-1. Zur Copolymerisation können Gemische von Olefinen untereinander verwendet werden oder Gemische von Olefinen mit anderen ethylenisch ungesättigen Verbindungen, wie z.B. mit Vinylacetat, Vinylchlorid oder Alkylacrylaten. Von besonderem Interesse ist das Verfahren für die Polymerisation von Propylen.

Gegenstand der Erfindung sind auch die verfahrensgemäss stabilisierten Polymerisate oder Copolymerisate von Olefinen, insbesondere ein so stabilisiertes Polypropylen.

Die folgenden Beispiele erläutern das Verfahren näher, ohne es auf den Umfang der Beispiele zu beschränken. Darin bedeuten Teile Gewichtsteile und % Gewichtsprozente, soweit nicht anders angegeben.

Beispiel 1: Polymerisation von Propylen

Die Polymerisation erfolgt in einem thermostatisierten 4 Liter-Rührautoklaven aus rostfreiem Stahl, der vor Beginn der Polymerisation durch einstündiges Spülen mit Propylengas bei 70°C getrocknet wird. Die Herstellung der festen Katalysatorkomponente aus sphärischem $MgCl_2$ und $TiCl_4$ erfolgt wie in Beispiel 1 der US-A-4 111 835 beschrieben. Sie enthält 2,9 % Ti und 19 % Mg. 10 mg dieses Katalysators werden in 25 ml n-Hexan suspendiert und eine Mischung von 685 mg Triethylaluminium, 80 mg Phenyltriethoxysilan und 200 ml Hexan zugegeben. Diese Katalysator-Suspension wird unter Propylengas in den Autoklaven überführt. Nach Schliessen des Autoklaven werden 1,25 l hochreiner Wasserstoff aufgepresst und schliesslich unter Druck 1,2 kg flüssiges Propylen eingefüllt. Unter Rühren (500 U/min) wird auf 70°C erwärmt und bei dieser Temperatur 2 Stunden gehalten. Dann wird das überschüssige Propylen abgeblasen und das erhaltene Polymerisat 10 Minuten bei 100°C mit Wasserdampf behandelt und anschliessend 8 Stunden bei 50°C getrocknet. Das Polymerisat besteht aus kugelförmigen Teilchen. Folgende Untersuchungen des Polymerisates werden durchgeführt.

Die Katalysatoraktivität (g Polymer/g Katalysator) wird aus dem durch Atomabsorption bestimmten Mg-Gehalt und der Polymerausbeute berechnet.

Die Isotaktizität wird bestimmt als prozentualer Anteil des in heissem Xylol unlöslichen Polymeren. Dazu wird das Polymere in heissem Xylol gelöst und nach dem Abkühlen der unlösliche Anteil abfiltriert und bis zur Gewichtskonstanz getrocknet.

Die Polymermorphologie wird visuell qualitativ beurteilt, um festzustellen, ob Agglomerationen stattgefunden haben.

Die Farbe des Polymers wird durch den Yellowness Index gemäss ASTM D 1925-70 charakterisiert.

Als indirektes Mass für das Molekulargewicht wird die Grenzviskosität [η] in Tetrachlorethylen bei 135°C bestimmt sowie der Schmelzindex (Melt Flow Index) gemäss ASTM D 1238 bei 230°C/2160 g.

Die Stabilität gegen oxidativen Abbau wird bestimmt durch die Zeit bis zu einer merklichen Versprödung des Polymeren bei Ofenalterung bei erhöhter Temperatur. Dieser Test wird an Platten durchgeführt, die durch Verpressen bei 220°C hergestellt werden.

Für das oben beschriebene unstabilisierte Polypropylen ergeben sich folgende Werte:

| | | |
|---|---|---|
| Katalysatoraktivität | | 45,5 kg |
| Isotaktizität | | 97,0 % |
| Grenzviskosität | | 1,8 dl/g |
| Morphologie | kugelförmig | |
| Schmelzindex | 15 g/10 min | |
| Yellowness Index | | 4,5 |
| Ofenalterung von Platten | | bei 135°C: bei 150°C: |
| 0,75 h0,50 h | | |

Beispiel 2: Stabilisierung

Es wird wie in Beispiel 1 verfahren. Etwa 10 Minuten nach Beginn der Polymerisation wird eine Lösung von 0,45 g des in Tabelle 1 angegebenen Stabilisators (Piperidinverbindung) in 50 ml Hexan in den Autoklaven zugegeben. Polymerisation, Aufarbeitung und Charakterisierung des Polymerisates geschieht wie in Beispiel 1. Die erhaltenen Kennwerte sind in Tabelle 1 aufgeführt.

Tabelle 1

| Stabilisator (Verb. Nr.) | 1 | 2 | 4 | 8 | 9 | 10 | 11 |
|---|---|---|---|---|---|---|---|
| Katalysatoraktivität (kg/g) | 45,5 | 43 | 41,8 | 40 | 43 | 45,5 | 45,5 |
| Isotaktizität (%) | 97,1 | 97,1 | 96,8 | 96,9 | 97,0 | 97,1 | 97,2 |
| Grenzviskosität (dl/g) | 1,9 | 1,8 | 2,0 | 1,8 | 1,84 | 1,56 | 1,55 |
| Morphologie | +*) | + | + | + | + | + | + |
| Schmelzindex (g/10 min) | 6,6 | 9,0 | 6,0 | 6,3 | 13,3 | 15,3 | 14,2 |
| Yellowness Index | 2,2 | 1,9 | 2,4 | 2,5 | 2,2 | 2,4 | 2,3 |
| Ofenalterung (h) bei 135°C | >700 | >700 | 700 | >700 | 860 | 900 | 860 |
| bei 150°C | 180 | 325 | 370 | 320 | 250 | 55 | 240 |

*) + = wie in Beispiel 1

Tabelle 1 (Fortsetzung)

| Stabilisator (Verb. Nr.) | 13 | 14 | 15 | 17 | 18 |
|---|---|---|---|---|---|
| Katalysatoraktivität (kg/g) | 45,5 | 45,5 | 40,9 | 45,5 | 45,5 |
| Isotaktizität (%) | 97,0 | 96,9 | 97,0 | 97,0 | 97,0 |
| Grenzviskosität (dl/g) | 1,55 | 1,73 | 1,54 | 1,90 | 1,75 |
| Morphologie | +*) | + | + | + | + |
| Schmelzindex (g/10 min) | 16,7 | 13,8 | 14,2 | 8,1 | 12,6 |
| Yellowness Index | 2,8 | 2,6 | 4,4 | 2,8 | 2,4 |
| Ofenalterung (h) bei 135°C | 410 | 458 | 220 | 700 | 860 |
| bei 150°C | 25 | 250 | 70 | 370 | 119 |

*) + = wie in Beispiel 1

Tabelle 1 (Fortsetzung)

| Stabilisator (Verb. Nr.) | 19 | 20 | 21 | 22 | 23 | 24 | 25 |
|---|---|---|---|---|---|---|---|
| Katalysatoraktivität (kg/g) | 43,2 | 45,5 | 45,5 | 43 | 43,2 | 45,5 | 44,1 |
| Isotaktizität (%) | 97 | 97 | 97 | 97 | 97 | 92,2 | 97 |
| Morphologie | + | + | + | + | + | + | + |
| Schmelzindex (g/10 min) | 5,8 | 5,4 | 7,3 | 8,4 | 6,2 | 14,2 | 2,8 |
| Yellowness Index | 3,2 | 3,4 | 3,3 | 3,4 | 3,2 | 4,0 | 3,7 |
| Ofenalterung (h) bei 150°C | 288 | 216 | 408 | 400 | 410 | 240 | 400 |

Beispiel 3:

Es wird wie in Beispiel 1 verfahren. Eine Stunde nach Beginn der Polymerisation wird eine Lösung von 0,21 g der Verbindung Nr. 3 in 50 ml Hexan dem Polymerisationsgemisch zugesetzt. Aufarbeitung und Charakterisierung geschieht wie im Beispiel 1.

Folgende Werte wurden erhalten:

| | | |
|---|---|---|
| Katalysatoraktivität | 45,5 kg | |
| Isotaktizität | 97,0 % | |
| Grenzviskosität | 1,9 dl/g | |
| Morphologie | wie in Beispiel 1 | |
| Schmelzindex | 7,4 (g/10 min) | |
| Yellowness Index | 4,2 | |
| Ofenalterung von Platten | bei 135°C: | >100 h |
| | 150°C | 144 h |

**Patentansprüche**

1. Verfahren zum Stabilisieren von Polyolefinen und Olefin-copolymeren, welche durch Niederdruck-Polymerisation an einem festen Katalysator, der durch Umsetzung eines Aluminiumalkyls mit einem festen Produkt aus einem Magnesiumdihalogenid in aktiver Form und einer Titanverbindung bereitet urde, hergestellt werden, durch Zusatz eines sterisch gehinderten Piperidinderivates zur Polymerisation, dadurch gekennzeichnet, dass man ein Piperidinderivat der Formel I verwendet,

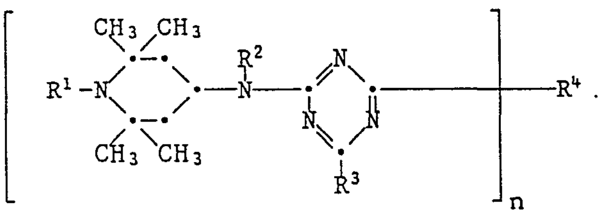 (I)

worin n 1-4 ist,$R^1$ $C_1$-$C_4$-Alkyl, Allyl, Benzyl oder Acetyl bedeutet und im Fall von n=2 auch Wasserstoff bedeutet,
$R^2$ $C_1$-$C_{18}$-Alkyl, $C_5$-$C_{12}$-Cycloalkyl, $C_7$-$C_{12}$-Phenylalkyl, durch -O- oder -N($R^6$)- unterbrochenes $C_3$-$C_{12}$-Alkyl oder eine Gruppe der Formel II bedeutet,

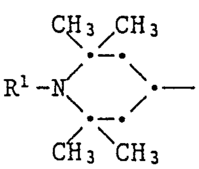 (II)

$R^3$ eine Gruppe -$OR^5$, -$SR^5$ oder

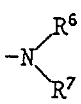

ist,
$R^4$, wenn n = 1 ist, eine der für $R^3$ gegebenen Bedeutungen hat, wenn n = 2 ist, eine der Gruppen -X-$R^8$-Y-,

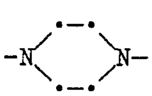 , 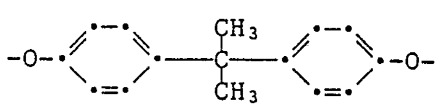 , 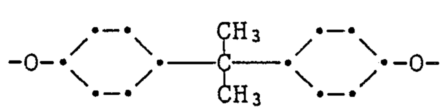

oder 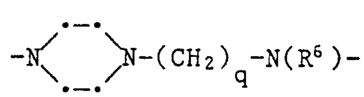

bedeutet, worin q 2-6 ist,
wenn n = 3 ist, eine der Gruppen

$-N(R^6)-(CH_2)_m-N-(CH_2)_m-N(R^6)-$, $-(O-CH(R^9)-CH_2)_3-N$ oder

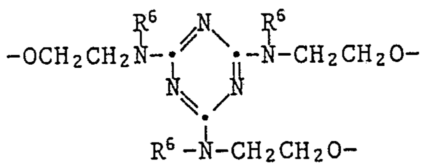

bedeutet und, wenn n = 4 ist, eine Gruppe

$-N(R^6)-CH_2CH_2-N-CH_2CH_2-N-CH_2CH_2-N(R^6)-$ oder

$-N(R^6)-(CH_2)_3-N-(CH_2)_p-N-(CH_2)_3-N(R^6)-$
bedeutet,
$R^5$ $C_1$-$C_{18}$-Alkyl, $C_3$-$C_{12}$-Alkenyl, $C_5$-$C_{12}$-Cycloalkyl, $C_7$-$C_{12}$-Phenylalkyl, Phenyl oder durch $C_1$-$C_4$-Alkyl, $C_1$-$C_4$-Alkoxy oder Halogen substituiertes Phenyl bedeutet,
$R^6$ und $R^7$ unabhängig voneinander Wasserstoff, $C_1$-$C_{18}$-Alkyl, $C_5$-$C_{12}$-Cycloalkyl, $C_7$-$C_{12}$-Phenylalkyl oder eine Gruppe der Formel II bedeuten, oder $R^6$ und $R^7$ zusammen $C_4$-$C_{10}$-Alkylen oder $C_5$-$C_7$-Oxa- oder Azaalkylen bedeuten,
$R^8$ $C_2$-$C_{12}$-Alkylen, durch -O- oder -N($R^6$)- unterbrochenes $C_4$-$C_{12}$-Alkylen, $C_5$-$C_{12}$-Cycloalkylen oder Phenylen bedeutet,
$R^9$ Wasserstoff oder Methyl bedeutet,
X und Y unabhängig voneinander -O- oder -N($R^6$)- bedeuten,
m 2 oder 3 bedeutet und p 2-10 bedeutet.

2. Verfahren gemäss Anspruch 1, dadurch gekennzeichnet, dass man ein Piperidinderivat der Formel I verwendet, worin n 1-4 ist,
$R^1$ $C_1$-$C_4$-Alkyl ist und im Fall von n = 2 auch Wasserstoff ist,
$R^2$ $C_1$-$C_{12}$-Alkyl, Cyclohexyl, Benzyl oder eine Gruppe der Formel II ist,
$R^3$ eine Gruppe -O$R^5$ oder -N($R^6$)($R^7$) ist,
$R^4$, wenn n = 1 ist, eine der für $R^3$ gegebenen Bedeutungen hat, wenn n = 2 ist, eine Gruppe -X-$R^8$-Y- oder

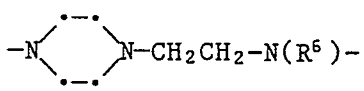

bedeutet,
wenn n = 3 ist, eine Gruppe

$-N(R^6)-(CH_2)_m-N-(CH_2)_m-N(R^6)-$ bedeutet,
und wenn n = 4 ist, eine Gruppe

$-N(R^6)-CH_2CH_2-N-CH_2CH_2-N-CH_2CH_2-N(R^6)-$
oder

$-N(R^6)-CH_2CH_2CH_2-N-(CH_2)_p-N-CH_2CH_2CH_2-N(R^6)-$ bedeutet,
$R^5$ $C_1$-$C_{12}$-Alkyl, Cyclohexyl, Benzyl, Phenyl oder Tolyl bedeutet,
$R^6$ Wasserstoff, $C_1$-$C_{12}$-Alkyl, Cyclohexyl, Benzyl oder eine Gruppe der Formel II bedeutet,
$R^7$ $C_1$-$C_{12}$-Alkyl, Cyclohexyl oder eine Gruppe der Formel II bedeutet, oder
$R_6$ und $R^7$ zusammen Tetramethylen, Pentamethylen oder 3-Oxapentamethylen bedeuten,
$R^8$ $C_2$-$C_{12}$-Alkylen, Cyclohexylen oder Phenylen bedeutet,
X und Y -O- oder -N($R^6$)- bedeuten,
m 2 oder 3 ist und p 2-6 bedeutet.

3. Verfahren gemäss Anspruch 1, dadurch gekennzeichnet, dass in Formel I $R^1$ Methyl ist.

4. Verfahren gemäss Anspruch 1, dadurch gekennzeichnet, dass in Formel I $R^2$ $C_1$-$C_8$-Alkyl oder eine Gruppe der Formel II ist.

5. Verfahren gemäss Anspruch 1, dadurch gekennzeichnet, dass in Formel I $R^3$ eine Gruppe -N($R^6$)($R^7$) ist.

6. Verfahren gemäss Anspruch 1, dadurch gekennzeichnet, dass in Formel I n = 1 ist und $R^4$ eine Gruppe -N($R^6$)($R^7$) ist.

7. Verfahren gemäss Anspruch 1, dadurch gekennzeichnet, dass in Formel I n = 2 ist, X und Y eine Gruppe -N($R^6$)- bedeuten und $R^8$ $C_2$-$C_6$-Alkylen ist.

8. Verfahren gemäss Anspruch 1, dadurch gekennzeichnet, dass in Formel I n = 2 ist und $R^4$ eine Gruppe

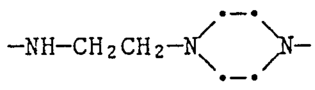

ist.

9. Verfahren gemäss Anspruch 1, dadurch gekennzeichnet, dass in Formel I n = 3 oder 4 ist und $R^6$ Wasserstoff oder $C_1$-$C_4$-Alkyl ist.

10. Verfahren gemäss Anspruch 1, dadurch gekennzeichnet, dass der Katalysator aus sphärischem Magnesiumchlorid bereitet wird.

11. Verfahren gemäss Anspruch 1, dadurch gekennzeichnet, dass bei der Bereitung des Katalysators als Titanverbindung Titantetrachlorid verwendet wird.

12. Verfahren gemäss Anspruch 1, dadurch gekennzeichnet, dass der Katalysator durch Zusatz eines Elektronendonators aktiviert wird.

13. Verfahren gemäss Anspruch 12, dadurch gekennzeichnet, dass als Elektronendonator eine organische Siliziumverbindung mit mindestens einer Si-O-C-Bindung verwendet wird.

14. Verfahren gemäss Anspruch 1, dadurch gekennzeichnet, dass man zur Polymerisation ausser der sterisch gehinderten Piperidinverbindung einen Phosphor-III-ester zusetzt.

15. Verfahren gemäss Anspruch 14, dadurch gekennzeichnet, dass man ein Triorganophosphit zusetzt.

16. Verfahren gemäss Anspruch 1 oder 14, dadurch gekennzeichnet, dass man zur Polymerisation zusätzlich ein Antioxidans vom Typ der sterisch gehinderten Phenole zusetzt.

17. Verfahren gemäss Anspruch 1, dadurch gekennzeichnet, dass man das Verfahren auf die Polymerisation von Propylen anwendet.

18. Ein nach dem Verfahren des Anspruches 1 stabilisiertes Polymerisat.

19. Ein nach dem Verfahren des Anspruches 1 stabilisiertes Polypropylen.

Europäisches
Patentamt

# EUROPÄISCHER RECHERCHENBERICHT

Nummer der Anmeldung

EP 89 81 0480

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X | EP-A-0 192 987 (HIMONT INC.)<br>* Ansprüche *<br>--- | 1-7 | C 08 F 2/44<br>C 08 F 10/00<br>C 08 K 5/349 |
| A | EP-A-0 254 348 (ENICHEM SINTESI, S.p.A.)<br>* Ansprüche *<br>--- | 14,15 | |
| A | CHEMICAL ABSTRACTS, Band 105, Nr. 16, 20. Oktober 1986, Seite 11, Zusammenfassung Nr. 134505p, Columbus, Ohio, US; & JP-A-61 55 103 (UBE INDUSTRIES, LTD) 19-03-1986<br>* Zusammenfassung *<br>----- | | |

| RECHERCHIERTE SACHGEBIETE (Int. Cl.5) |
|---|
| C 08 F<br>C 08 L<br>C 08 K |

Der vorliegende Recherchenbericht wurde für alle Patentansprüche erstellt

| Recherchenort | Abschlußdatum der Recherche | Prüfer |
|---|---|---|
| DEN HAAG | 07-10-1989 | DE LOS ARCOS Y VELAZQUEZ |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)